# EUROPEAN PATENT APPLICATION

(11) **EP 1 302 752 A2**
(43) Date of publication of application: **16.04.2003**
(21) Application number: 02256842.2
(22) Date of filing: 02.10.2002
(51) Int. Cl.: G01C 21/36

(54) **Displaying the destination in a navigation apparatus**

(30) Priority: 12.10.2001 JP 2001315140
(71) Applicant: Alpine Electronics, Inc., Tokyo (JP)
(72) Inventor: Niitsuma, Eichi, c/o Alpine Electronics, Inc., Iwaki-city, Fukushima (JP)
(74) Representative: Kensett, John Hinton

(57) **Abstract**

A navigation apparatus has a destination setting unit (17). When the necessity for displaying the name of a city arises in order to set a destination, if the city has a plurality of names, the destination setting unit (17) only displays names in two languages, that is, an operating language currently used in navigation and a language of a country in which the destination resides, and does not display city names in other languages.

## Description

### BACKGROUND OF THE INVENTION

### 1. Field of the Invention

The present invention relates to navigation apparatuses with a route guidance function for providing route guidance for reaching a preset destination, and more particularly relates to a navigation apparatus for displaying, when the necessity for displaying the name of a city arises, if there is a plurality of names for that city, displaying the name of the city in two languages, namely, the current operating language for use with navigation and the language of a country in which the destination resides.

### 2. Description of the Related Art

Navigation apparatuses detect the position of a vehicle, read map data on the periphery of the vehicle position from a map storage medium, such as a CD-ROM (compact disk read only memory) or a DVD (digital versatile disk), render a map image on a display screen, and overlappingly render a vehicle icon at a predetermined position on the map image. As the vehicle position changes in accordance with the vehicle movement, the vehicle icon on the image is also moved. Alternatively, the vehicle icon is fixed at a predetermined position, such as the center of the display screen, and the map is scrolled. As a result, map information on the periphery of the vehicle position can be recognized at a glance.

Such navigation apparatuses have a route guidance function for guiding a driver to a destination. In order to enable the navigation apparatuses to perform route guidance using the route guidance function, a destination must be entered, and a route to the destination must be searched for. In order to enter a destination, the following methods are possible:
(1) A method of directly entering the address of a destination;
(2) A method of entering the category of a landmark or a POI (Point of Interest), which is a destination, and the name of a city where the landmark or POI is located, displaying a candidate list of POIs, and selecting the POI, which is the destination, from the candidate list;
(3) A method of directly designating and entering a destination on a map using a cursor;
(4) A method of entering the intersection of two streets as a destination;
(5) A method of entering the phone number of a destination; and
(6) A method of giving a predetermined name to an address, registering the address with the corresponding predetermined name in an address book, displaying the address book, and entering the address of a destination.

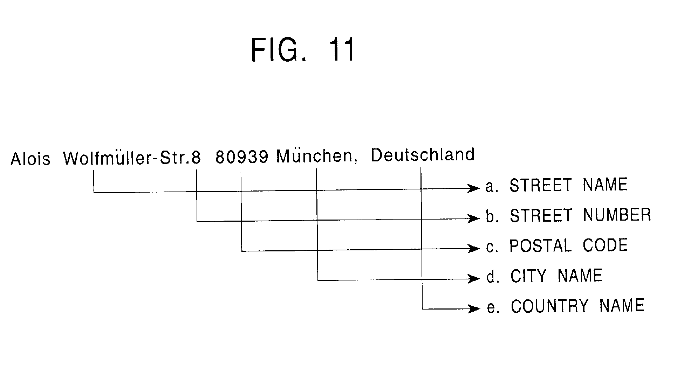

The address notation in Europe, which is shown in Fig. 11, differs from that in Japan, and has the following format:
street name/street number/postal code/city name/country name

In Europe, a destination can be specified by entering a street name, a street number, and a city name.

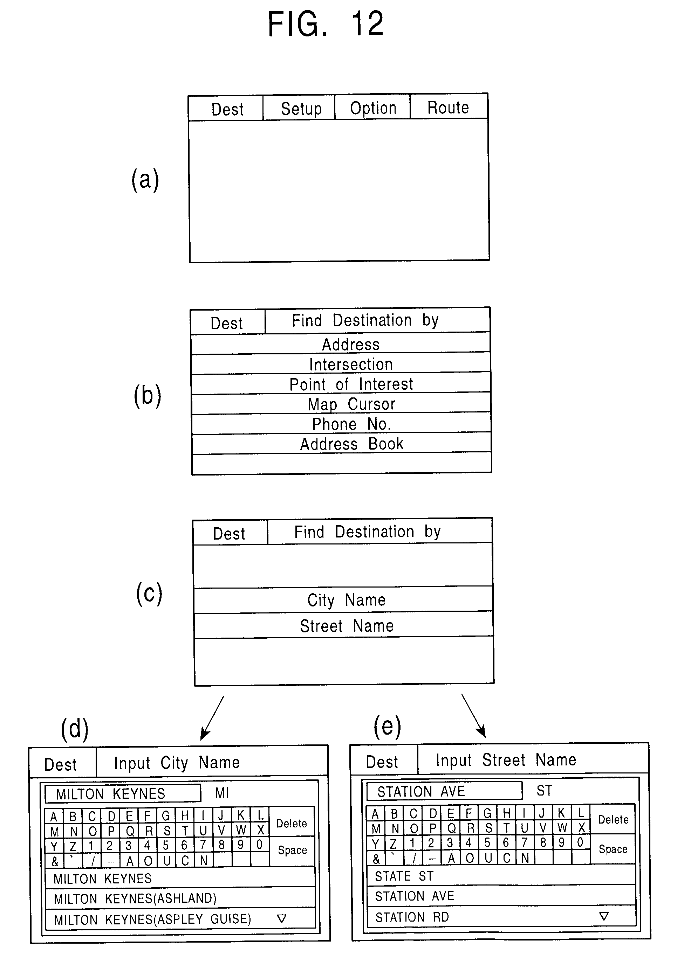

In a navigation apparatus for use in Europe, if a destination is to be entered by method (1), a user operates a menu key on a remote control and displays a main menu on a screen (see Fig. 12(a)), and selects the menu item "Dest" from the main menu. By selecting "Dest", the navigation apparatus displays, as shown in Fig. 12(b), the screen "Find Destination by" for specifying a destination entering method. If the user selects the menu item "Address", the navigation apparatus displays, as shown in Fig. 12(c), the menu items "City Name" and "Street Name". In order to start with the city name and enter the address of the destination, the user selects the menu item "City Name". In order to start with the street name and enter the address of the destination, the user selects the menu item "Street Name".

For example, when the user selects the menu item "City Name", a navigation controller displays, as shown in Fig. 12(d), an alphanumeric keyboard for entering the name of a city on the screen. When the user enters the first few characters of the city name using the keyboard, a list of city names starting with these characters is scrollably displayed. Fig. 12(d) shows a case in which the characters "MI" are entered. In this case, city names starting with "MI", namely, "MILTON KEYNES", "MILTON KEYNES (ASHLAND)", and "MILTON KEYNES (ASPLEY GUISE)", are displayed. Using a joystick key, the city name list is scrolled and a desired city name (MILTON KEYNES) is selected. Accordingly, the city name specifying operation is completed. Then, the navigation controller displays a street name list of all streets existing in the specified city (not shown). The user scrolls the street name list and selects a desired street name. Finally, the user enters a house number, a building number, or a street number (all of which are generally referred to as a "street number"), and the destination address entering processing is completed. Accordingly, the navigation controller can obtain the longitude and latitude of the destination from the address, searches for a guidance route from the current vehicle position to the destination, and displays the guidance route.

In contrast, when the user selects the menu item "Street Name", the navigation controller displays, as shown in Fig. 12(e), an alphanumeric keyboard for entering a street name on the screen. When the user enters the first few characters of the street name using the keyboard, a list of street names starting with these characters is scrollably displayed. Fig. 12(e) shows a case in which the characters "ST" are entered. In this case, street names starting with "ST", namely, "STATE ST", "STATION AVE", and "STATION RD", are displayed. Using the joystick key, the user scrolls the street name list is scrolled and selects a desired street name (STATION AVE).

Accordingly, the street name specifying operation is completed. The navigation controller displays a city name list of all cities in which the specified street resides (not shown). The user scrolls the city name list and selects a desired city name. Finally, the user enters a house number or a building number, and the destination address entering processing is completed. Accordingly, the navigation controller can obtain the longitude and latitude of the destination from the address, searches for a guidance route from the current vehicle position to the destination, and displays the guidance route.

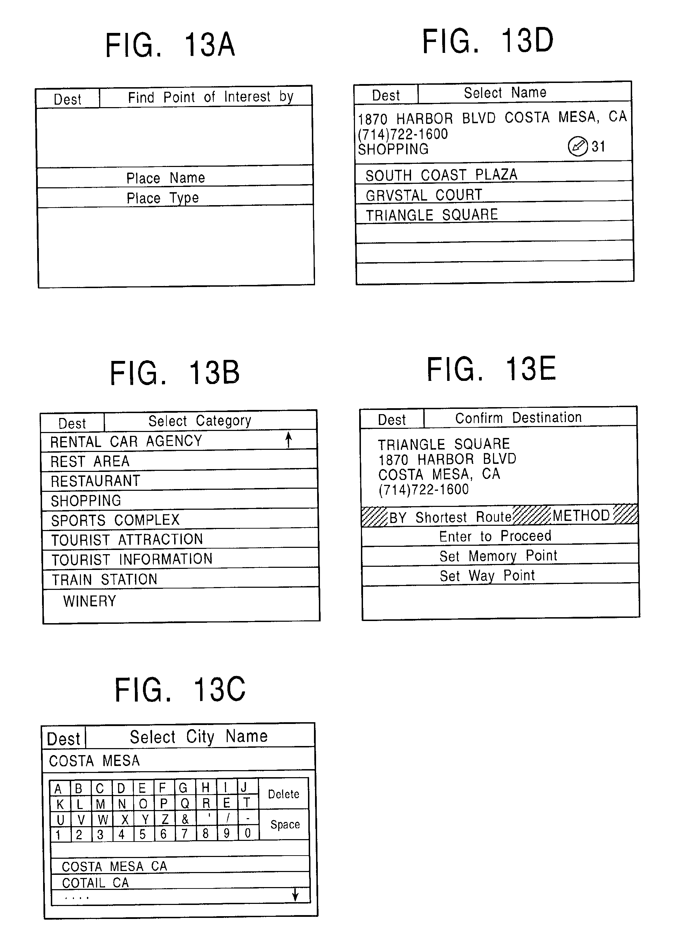

Figs. 13A to 13e illustrate the operation of specifying a POI and entering a destination. Prior to displaying the screen "Find Destination by", the operation is the same as the address entering operation shown in Fig. 12(a) to (e). On the screen "Find Destination by", when the user selects the menu item "Point of Interest", the navigation controller displays, as shown in Fig. 13A, the menu items "Place Name (Landmark Name)" and "Place Type (Landmark Type)". For example, the user selects the menu item "Place Type". Accordingly, the navigation controller displays, as shown in Fig. 13B, the screen "Select Category", which displays a list of categories. When the user selects a predetermined category (such as shopping) from the category list, the navigation controller displays, as shown in Fig. 13C, a keyboard for entering a city name. When the user enters the first few characters of the city name using the keyboard, a list of city names starting with these characters is scrollably displayed. The user selects a desired city name (for example, Costa Mesa) from the list. When the city name is entered, the navigation controller scrollably displays, as shown in Fig. 13D, a list of all POI names (landmark names) in the specified category existing in the city. When the user selects a desired POI (for example, TRIANGLE SQUARE) from the POI list, the name, address, and phone number of the POI are displayed, as shown in Fig. 13E. If the POI is correct as a destination, the user selects "Enter to Proceed" and confirms the POI as the destination. Subsequently, the navigation controller obtains the longitude and latitude of the destination from the address, searches for a guidance route from the current vehicle position to the destination, and displays the guidance route.

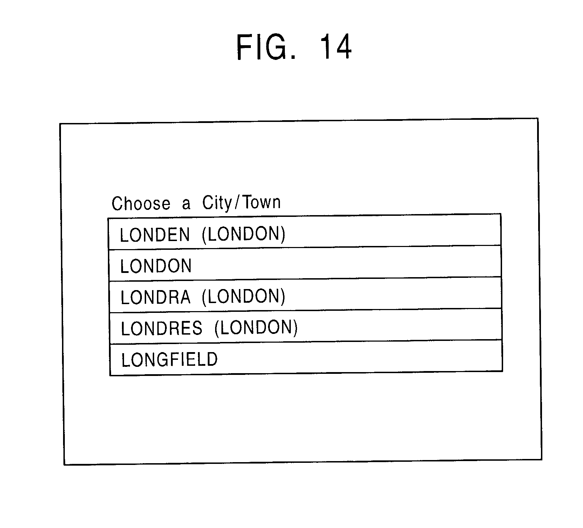

A navigation apparatus covering a plurality of countries, such as a navigation apparatus for use in Europe, is compatible with multiple languages. The navigation apparatus creates and displays a map or a menu image in a language selected by a language selecting operation. There are many cities having different names depending on the language. When the navigation apparatus for use in Europe is to display a city name, the navigation apparatus displays the city name by displaying all names. For example, London, England (United Kingdom) has the following four names depending on the language:
LONDON (English notation)
LONDEN
LONDRA (Italian notation)
LONDRES (French notation)
Also, Munich, Deutschland has the following three names depending on the language:
Munchen (u with umlaut)
Munich
Monaco
These names are referred to as exonyms. When there is a plurality of names for a city, a known navigation apparatus displays, as shown in Fig. 14, all names when displaying a city name list for allowing the user to enter a destination. In Fig. 14, London is represented in four languages.

Since there are many cities having a plurality of names, when city names are displayed in all languages, the amount of data increases, the number of scrolls is increased, and hence the operability is deteriorated. When city names are displayed in all languages, it takes time to select a desired city name as a destination. The user cannot easily indicate a desired city name and may be confused.

### SUMMARY OF THE INVENTION

According to the present invention, a navigation apparatus with a route guidance function for providing route guidance for reaching a preset destination includes an operating language setting unit for setting a language to be used in navigation and a destination setting unit for setting a destination. When the necessity for displaying the name of a city arises in order to set the destination, if there is a plurality of names for the city, the destination setting unit displays names in accordance with the preset operating language and a language of a country in which the destination resides. Accordingly, when the name of a city having a plurality of names is to be displayed, only names in accordance with the operating language used in navigation and a language of a country in which the destination resides are displayed. The number of city names to be displayed can be reduced, and the operability is improved. A desired city name can be easily selected and entered.

According to the present invention, when displaying the name of a city having a plurality of names, the city is displayed only in an operating language for use in navigation and a language of a country in which a destination resides. Thus, the number of city names to be displayed can be reduced, and the operability is improved. Accordingly, when setting a destination, a user can easily enter and select a desired city name.

### BRIEF DESCRIPTION OF THE DRAWINGS

Fig. 1 is a block diagram showing a navigation apparatus according to the present invention;
Figs. 2A to 2C illustrate an address database;
Figs. 3A to 3C illustrate a POI database;
Fig. 4(a) to (d) illustrates the operation of selecting a language;
Fig. 5 is a flowchart showing a process of displaying a city name;
Fig. 6(a) to (e) illustrates a processing flow of directly indicating a destination on a map using a cursor;
Fig. 7(a) to (c) illustrates the operation of selecting a country;
Fig. 8(a) to (g) illustrates a processing flow of setting a destination by entering an address;
Fig. 9(a) to (i) illustrates a processing flow of setting a destination by entering a landmark name;
Fig. 10(a) to (h) illustrates a processing flow of setting a destination by entering an intersection;
Fig. 11 shows an example of an address format for use in Europe;
Fig. 12(a) to (e) illustrates the known operation of specifying a destination by entering an address;
Figs. 13A to 13E illustrate the known operation of entering a destination using a POI; and
Fig. 14 shows an example of displaying exonyms of city names.

### DESCRIPTION OF THE PREFERRED EMBODIMENTS

### (A) Configuration of Navigation Apparatus

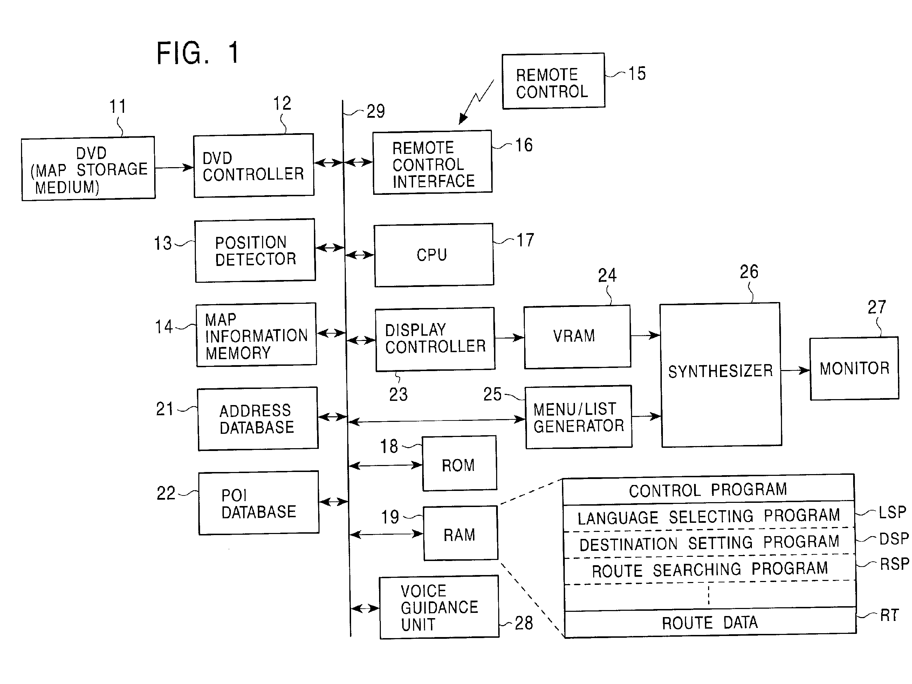

Fig. 1 shows the configuration of a navigation apparatus according to the present invention. A map storage medium 11, such as a DVD, stores map information. A DVD controller 12 controls reading of the map information from the DVD. A position detector 13 for detecting the current vehicle position is formed by a speed sensor for measuring the distance traveled, an angular velocity sensor for detecting the direction in which the vehicle is traveling, a GPS (global positioning system) receiver, and a position calculation CPU (central processing unit). A map information memory 14 stores map information on the periphery of the vehicle position, which is read from the DVD. A remote control 15 performs various settings and gives various instructions using menu selection, enters a destination, and enlarges/contracts an image. A remote control interface 16 is an interface with the remote control 15.

A CPU (navigation controller) 17 controls the overall navigation apparatus. A ROM (read only memory) 18 stores software (loading program) for downloading various control programs from the DVD or fixed data. A RAM (random access memory) 19 stores various control programs (such as a language selecting program LSP, a destination setting program DSP, and a route searching program RSP) downloaded from the DVD, detected guidance route data RT, and other processing results.

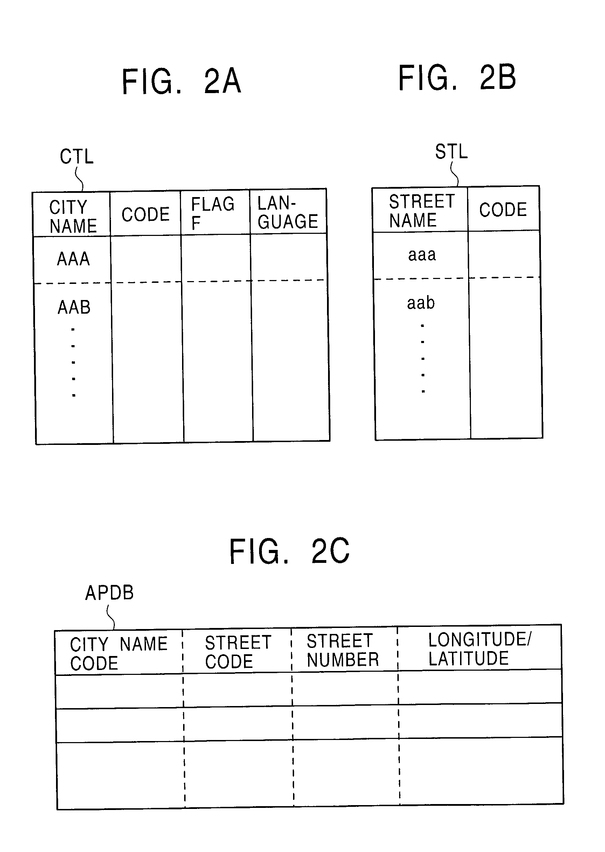

A storage unit 21 stores an address database read from the DVD. As shown in Figs. 2A to 2C, the storage unit 21 includes a city name list CTL of city names in alphabetical order, a street name list STL of street names in alphabetical order, and an address/position database APDB storing the longitude/latitude of a point indicated by an address (city code/street code/street number). The city name list CTL includes, in accordance with a city name, a city name code, a flag F indicating whether or not the city name is one of a plurality of names for that city, and if the city name is one of a plurality of names for that city, the language of the city name. When the necessity for displaying the name of a city arises, by referring to the city name list CTL, it can be determined whether or not there is a plurality of names for that city and detects the language of each name.

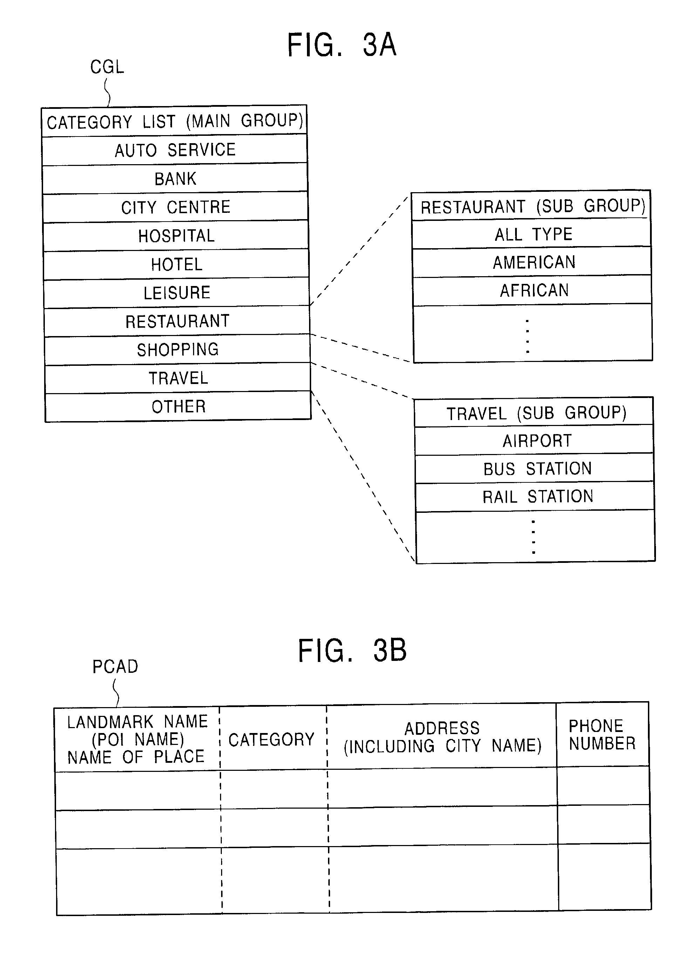

A storage unit 22 stores a POI database read from the DVD. As shown in Figs. 3A to 3C, the storage unit 22 includes a category list CGL and a point of interest (landmark)/category/address database PCAD storing a category, address, and phone number in accordance with a landmark name (POI). The category list CGL is hierarchically formed by a main group and a sub group. The main group includes auto service, bank, city centre, hospital, hotel, leisure, restaurant, shopping, travel, and others. Some of the categories in the main group include categories in the sub group.

A display controller 23 generates a map image and a guidance route image. A video RAM (VRAM) 24 stores the images generated by the display controller 23. A menu/list generator 25 generates various menu images and list images. An image synthesizer 26 combines various images and outputs a synthesized image. A display unit (monitor) 27 displays the image output from the image synthesizer 26. A voice guidance unit 28 gives voice guidance concerning the distance to an intersection and the direction in which the vehicle should travel. A bus line 29 interconnects these components.

### (B) Language Selection

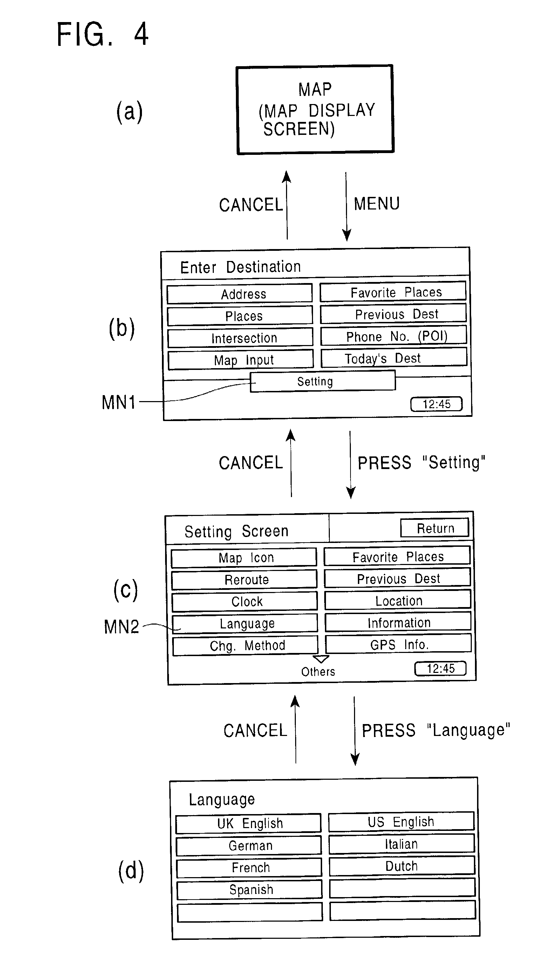

Fig. 4(a) to (d) illustrates a method for selecting a navigation language according to the present invention. It is assumed that English is currently selected. Fig. 4(a) shows a map display screen. When a menu key on a remote control or an operation unit is pressed, the screen displays a menu, such as that shown in Fig. 4(b), in English. When the setting item MN1 is pressed, a menu shown in Fig. 4(c) is displayed. When the Language item MN2 is selected, a language selecting menu shown in Fig. 4(d) is displayed, and hence the language can be selected. Thus, the user selects a menu item in accordance with a desired language. Although English has been selected in Fig. 4(a) to (d), if French is selected, each menu in Fig. 4(b) to (d) is displayed in French.

### (C) City Name Displaying Process

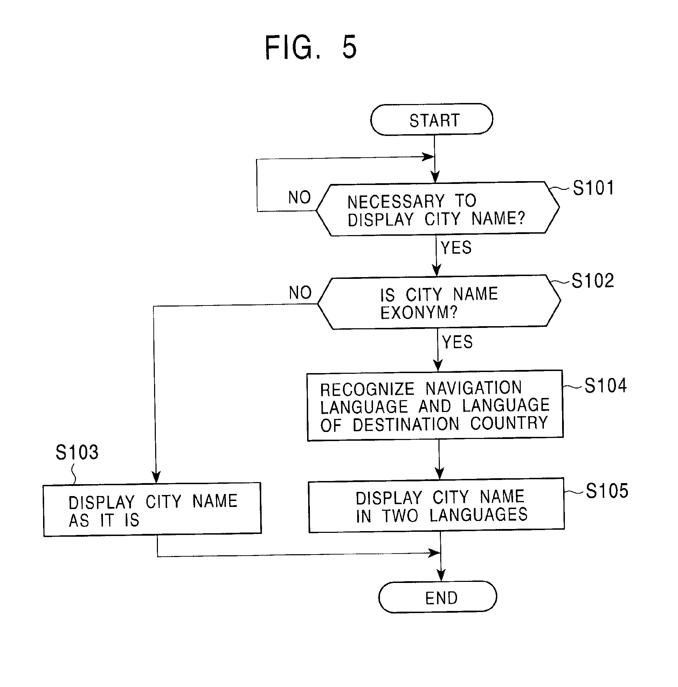

Fig. 5 is a flowchart showing a process of displaying a city name according to the present invention. When the necessity for displaying a city name arises in order to enter a destination (the determination is affirmative in step S1), it is determined whether or not the city name is an exonym (step S102). If the city name is not an exonym, the city name is displayed as it is (step S103). In contrast, if the city name is an exonym, the process recognizes a navigation language currently selected by language selection and a language in accordance with a country in which the destination resides (step S104). If the city name has an exonym, the city name is displayed in the two languages recognized in step S104 (step S105). If the two languages are the same, the city name is displayed in that common language.

Accordingly, if the operating language is French and the country in which the city resides is England, the city name is displayed as "LONDRES" in French and "LONDON" in UK English.

### (D) Application of City Name Displaying Process According to Present Invention in order to Enter Destination

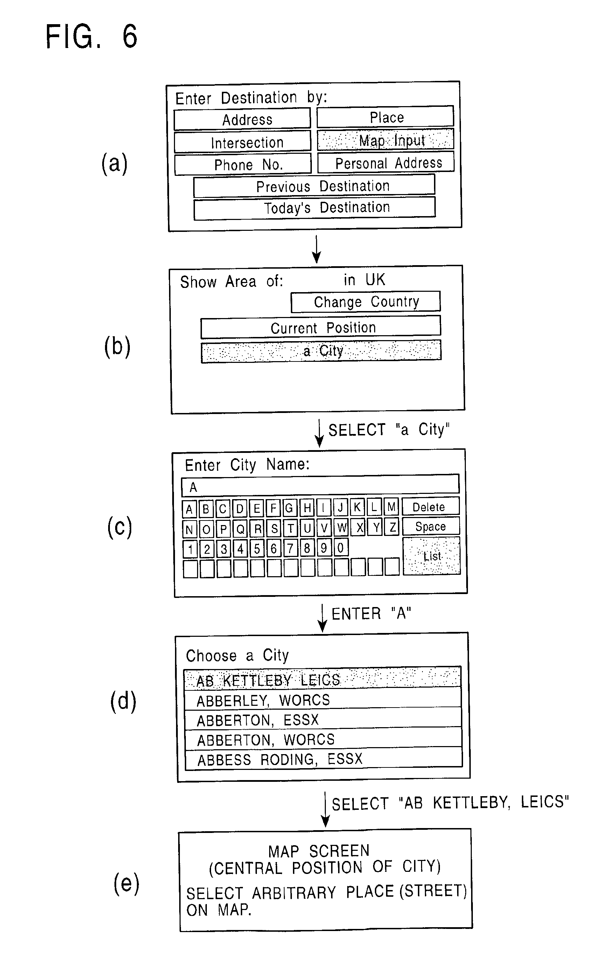

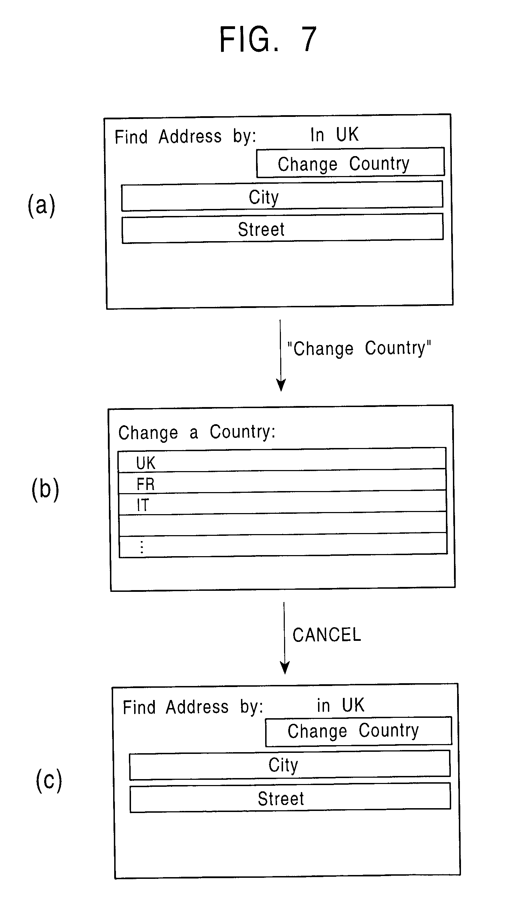

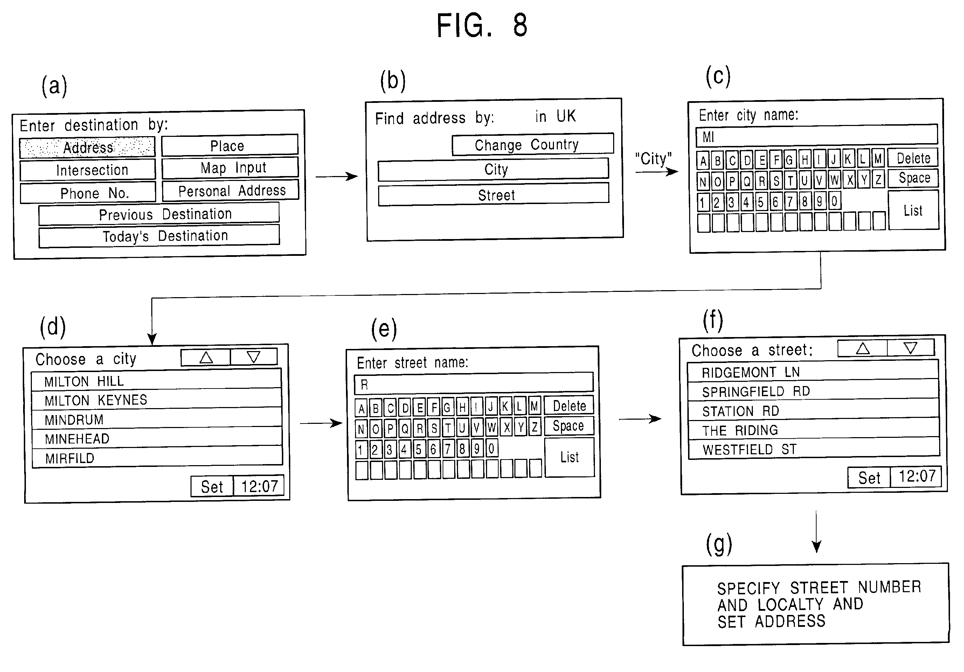

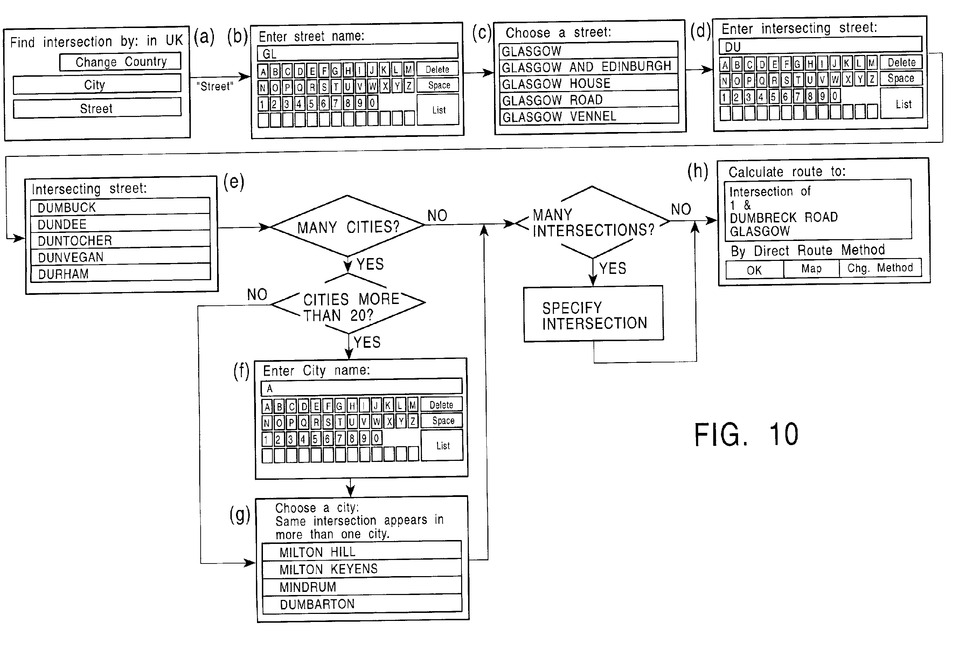

- When directly designating a destination on a map using a cursor
   Fig. 6 shows a processing flow of directly designating a destination on a map using a cursor.
   The user selects the menu item "Dest" from a main menu (for example, see Fig. 12(a)). When "Dest" is selected, the navigation controller (CPU) 17 displays the screen "Enter Destination by" for specifying a destination entering method (Fig. 6(a)). When the menu item "Map Input" is selected, the navigation controller 17 displays the screen "Show Area of" for selecting the current vehicle position "Current Position" or city. On the screen "Show Area of", the menu item "Change Country" for selecting a country in which the destination resides is also displayed.
   When entering the current vehicle position as a destination, "Current Position" is selected. In contrast, when entering a point in a predetermined city as a destination, a country in which the city resides is selected. Subsequently, "a City" is selected. Fig. 7(a) to (c) shows a case in which UK (England) is selected. In order to select another country, as shown in Fig. 7(a), the item "Change Country" is selected. When the item "Change Country" is selected, the navigation controller 17 displays a country name list (Fig. 7(b)). The user selects a desired country and presses a cancel key on the remote control, thus returning to the original screen (Fig. 7(c)).
   Referring back to Fig. 6(b), when "a City" is selected, the navigation controller 17 displays a keyboard on the display screen so as to enable the user to enter a city name in which the destination resides (Fig. 6(c)). When the user uses the keyboard and enters the first one or few characters of the city name in which the destination resides (the first character "A" is entered in Fig. 6(c)), the navigation controller 17 refers to the city name list CTL (Figs. 2A to 2C) in the address database 21, searches for city names starting with the entered character(s), and scrollably displays the detected city names in alphabetical order (Fig. 6(d)). In this case, when the city name has an exonym(s), the navigation controller 17 displays the city name in two languages, namely, the navigation operating language and the language of the country in which the destination resides, in accordance with the processing flow shown in Fig. 5.
   The user scrolls the city name list and selects a city name in which the destination resides, and the cursor is displayed at the center of the city. Subsequently, the user moves the cursor to locate a desired position and thus enters the destination (Fig. 6(e)).
- When setting a destination by entering an address
   Fig. 8(a) to (g) shows a processing flow of setting a destination by entering an address.
   When the user selects destination setting in the main menu, the navigation controller 17 displays the screen "Enter Destination by" for specifying a destination entering method (Fig. 8(a)). When the user selects the menu item "Address" on this screen, the navigation controller 17 displays the screen "Find Address by" including the menu items "City" and "Street" (Fig. 8(b)). On the screen "Find Address by", the menu item "Change Country" for selecting a country in which the destination resides is also displayed, and hence the user can specify a country in which a city and a street resides.
   When starting with a city name and entering the address of a destination, the user selects "City". When starting with a street name and entering the address of a destination, the user selects "Street". When starting with a city name and specifying a destination, the user selects "City" for specifying the designation, and the navigation controller 17 displays a keyboard for enabling the user to enter a city name on the screen (Fig. 8(c)). In this state, the user enters the first few characters of the city name, and a list of city names starting with the entered characters is scrollably displayed (Fig. 8(d)). Fig. 8(c) and (d) shows a case in which the characters "MI" are entered, and city names starting with "MI", namely, "MILTON HILL", "MILTON KEYNES", "MINDRUM", "MINEHEAD", and "MIRFIELD", are displayed. When displaying these city names, the navigation controller 17 determines whether or not the city name has an exonym(s). If the city name has an exonym(s), that city name is displayed in two languages, namely, a navigation operating language and a language of a country in which the destination resides.
   The user scrolls the city name list and selects a desired city name, for example, "MILTON KEYNES", and the navigation controller 17 displays a keyboard for enabling the user to enter a street name on the screen (Fig. 8(e)). In this state, the user enters the first few characters of the street name, and the navigation controller 17 refers to the address database 21 and scrollably displays a list of street names which exist in that city and which start with the entered characters (Fig. 8(f)). Fig. 8(e) and (f) shows a case in which the character "R" is entered, and several street names including, at the top of the list, a street name starting with "R", namely, "RIDGEMONT LN", and "SPRINGFIELD RD", "STATIN RD", "THE RIDING", and "WESTFIELD ST", are displayed. The user scrolls the street name list and selects a desired street name, for example, "STATION RD". When the street name is specified, the street number and locality are specified in the known manner, and the address of the destination is set. A route is searched for in accordance with the destination, which is a point indicated by the set address.
- When setting a destination by entering a POI (landmark)

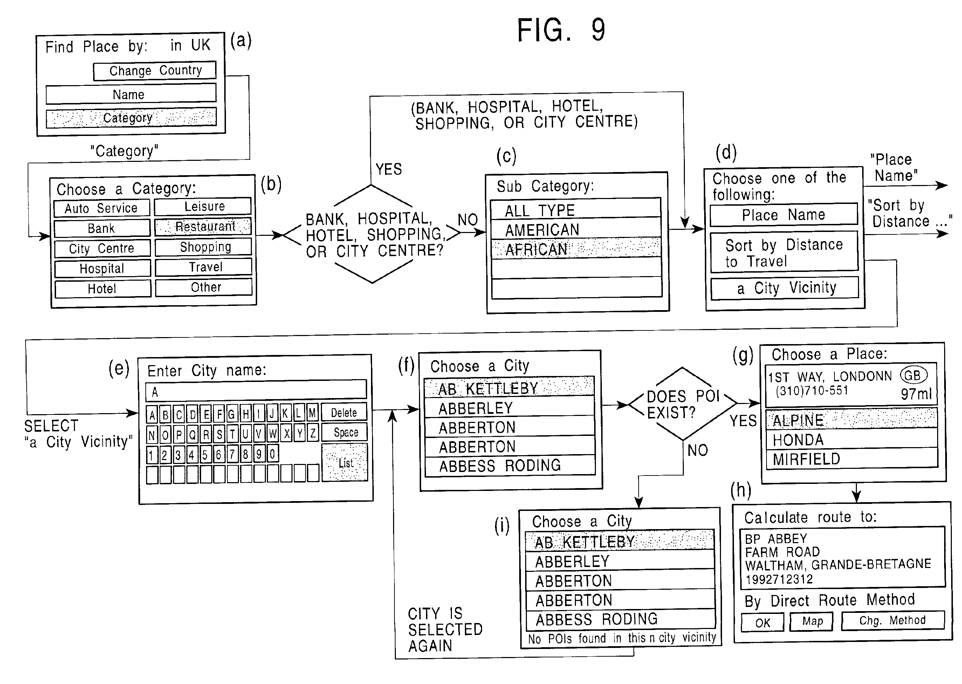

   Fig. 9(a) to (i) shows a processing flow of setting a destination by entering a landmark.
   On the screen "Enter Destination by" for specifying a destination entering method (Fig. 8(a)), the user selects the menu item "Place". Accordingly, the navigation controller 17 displays the screen "Find Place by" including the menu items "Name" and "Category" (Fig. 9(a)). On the screen "Find Place by", the menu item "Change Country" for selecting a country in which the landmark resides is also displayed. Thus, the user can specify a country in which the landmark resides.
   When specifying a landmark by entering a landmark name, the user selects the menu item "Name". When specifying a category of the landmark, the user selects "Category". For example, when "Category" is selected, the navigation controller 17 refers to the POI database 22 (Figs. 3A and 3B) and displays the screen "Choose a Category" including categories in the main group (Fig. 9(b)).
   Referring to Fig. 9(b), when the category of the landmark serving as the destination is entered, the navigation controller 17 determines whether or not the entered category is one of a bank, hospital, hotel, shopping, and city centre. If the determination is negative, the screen "Sub Category" for entering a category in the sub group is displayed (Fig. 9(c)). Fig. 9(b) shows a case in which "restaurant" is entered as the category in the main group.
   When the category in the sub group is specified, or when any one of a bank, hospital, hotel, shopping, and city centre is entered in Fig. 9(b), the navigation controller 17 displays a menu screen including the menu items "Place Name", "Sort by Distance to Travel", and "a City Vicinity" (Fig. 9(d)). When entering a city in which the landmark resides, the user selects "a City Vicinity" on this menu screen. When "a City Vicinity" is selected, the navigation controller 17 displays a keyboard for enabling the user to enter a city name on the screen (Fig. 9(e)). In this state, the user enters the first few characters of the city name in which the landmark resides, and the navigation controller 17 scrollably displays a list of city names starting with the entered characters (Fig. 9(f)). Fig. 9(e) and (f) shows a case in which the character "A" is entered. When displaying the city names, the navigation controller 17 determines whether or not the city name has an exonym(s) in accordance with the processing flow shown in Fig. 5. If the city name has an exonym(s), that city name is displayed only in two languages, namely, the operating language and a language of a country in which the destination resides.
   The user scrolls the city name list and selects a desired city name, for example, "AB KETTLEBY", and the navigation controller 17 determines whether or not the selected city has a landmark(s) in the category specified in Fig. 9(a) or (c). If the determination is affirmative, the navigation controller 17 displays a list of landmarks (Fig. 9(g)). The user scrolls the landmark list and selects a desired landmark, and the navigation controller 17 displays the name, address, and phone number of the landmark (Fig. 9(h)) and searches for a route to the landmark. If the selected city has no landmark in the category specified in Fig. 9(a) or (c), the navigation controller 17 displays a message indicating that there is no such landmark in the selected city (Fig. 9(i)), and asks the user to select a different city.
- When setting a destination by entering an intersection
   Fig. 10(a) to (h) shows a processing flow of setting a destination by entering an intersection.
   On the screen "Enter Destination by" for specifying a destination entering method (Fig. 8(a)), the user selects the menu item "Intersection", and the navigation controller 17 displays the screen "Find Intersection by" including the menu items "City" and "Street" (Fig. 10(a)). On the screen "Find Intersection by", the menu item "Change Country" for selecting a country in which the intersection resides is also displayed. Thus, the user can specify a country in which the intersection resides.
   When the user selects "Street", a keyboard for enabling the user to enter a street name forming the intersection is displayed on the screen (Fig. 10(b)). When the user enters the first few characters of the street name, the navigation controller 17 scrollably displays a list of street names starting with the entered characters (Fig. 10(c)). Fig. 10(b) and (c) shows a case in which the characters "GL" are entered. The user scrolls the street name list and selects a desired street name, for example, "GLASOW", and the navigation controller 17 displays a keyboard for enabling the user to enter a second street name on the screen (Fig. 10(d)). When the user enters the first few characters of the street name, the navigation controller 17 scrollably displays a list of street names starting with the entered characters (Fig. 10(e)). Fig. 10(d) and (e) shows a case in which the characters "DU" are entered. The user scrolls the street name list and selects a desired street name, for example, "DUMBRECK", and the navigation controller 17 determines whether or not a plurality of cities has intersections formed by streets having the same names as those of the two streets entered. If a plurality of cities has such intersections, it is determined whether or not twenty or more cities have such intersections. If the determination is affirmative, the navigation controller 17 displays a keyboard for enabling the user to enter a city name on the screen (Fig. 10(f)). When the user enters the first few characters of the city name in which the intersection resides, the navigation controller 17 scrollably displays a city name list of city names including, at the top thereof, a city name(s) starting with the entered characters, in alphabetical order (Fig. 10(g)). Fig. 10(g) shows a case in which the characters "MI" are entered. If there are less than 20 intersections formed by streets with the same names as those of the two streets entered, a city name list of city names in which these intersections reside is displayed (Fig. 10(g)).
   When displaying the city names as shown in Fig. 10(g), the navigation controller 17 determines whether or not the city name has an exonym(s) in accordance with the processing flow shown in Fig. 5. If the city name has an exonym(s), the navigation controller 17 only displays the city name only in two languages, namely, the operating language and a language of a country in which the destination resides.
   When the user scrolls the city name list and selects a desired city name, or when only one city has the intersection(s), the navigation controller 17 determines whether or not the two streets intersect each other at a plurality of points. If the two streets do not intersect each other at a plurality of points, the navigation controller 17 displays the two street names (Fig. 10(h)) and searches for a route to the intersection, which is regarded as the destination. If the two streets intersect each other at a plurality of points, the navigation controller 17 specifies a predetermined intersection and searches for a route to the intersection, which is regarded as the destination.

## Claims

1. A navigation apparatus with a route guidance function for providing route guidance for reaching a preset destination, comprising:
operating language setting means (17) for setting a navigation operating language; and
destination setting means (17) for setting a destination,
wherein, when the necessity for displaying the name of a city arises in order to set the destination, if there is a plurality of names for the city, the destination setting means (17) only displays the names of the city in accordance with the preset navigation operating language and a language of a country in which the destination resides.

2. A navigation apparatus according to claim 1, wherein the destination setting means (17) comprises means (17) for setting a country in which the destination resides.

3. A navigation apparatus according to claim 1 or 2, wherein, when the preset navigation operating language and the language of the country in which the destination resides are the same, the destination setting means (17) displays the city name only in that language.

4. A navigation apparatus according to any preceding claim, further comprising a city name list (CTL) storing, in accordance with a city name, information indicating whether or not the city name is one of a plurality of names, and if the city name is one of a plurality of names, the language of the city name,
wherein, when the necessity for displaying the name of a city arises, the destination setting means (17) refers to the city name list (CTL), determines whether or not there is a plurality of names for the city, and determines the language of the name, and if there is a plurality of names for the city, the destination setting means (17) only displays names in accordance with the operating language and the language of the country in which the destination resides.

5. A navigation apparatus according to any preceding claim, wherein the destination setting means (17):
(1) displays a keyboard on a display screen when entering a city name in which the destination resides,
(2) when at least one first character of the city name in which the destination resides is entered using the keyboard, displays a city name list of city names in alphabetical order including, at the top of the list, a city name starting with the entered character, and
(3) selects and enters a city name in which the destination resides from the city name list, and
when displaying the city name list, if there is a plurality of names for a predetermined city, the destination setting means (17) only displays names in accordance with the operating language and the language of the country in which the destination resides.

6. A navigation apparatus according to any preceding claim, wherein the destination setting means (17) displays a city name list of city names with a probability of having the destination, and, when selecting and entering a city name in which the destination resides from the city name list, if there is a plurality of names for a predetermined city, the destination setting means (17) only displays names in accordance with the operating language and the language of the country in which the destination resides.

7. A navigation apparatus according to any preceding claim, wherein, when the necessity for displaying the name of a city arises in order to set the destination, the destination setting means (17) determines whether or not the city name is an exonym, and, when the city name is not an exonym, the destination setting means (17) displays the city name as it is, and, when the city name is an exonym, the destination setting means (17) only displays city names in accordance with the preset navigation operating language and the language of the country in which the designation resides.
